# EUROPEAN PATENT SPECIFICATION

(11) **EP 4 342 156 B1**
(45) Date of publication and mention of the grant of the patent: **05.08.2026**
(21) Application number: 21735101.4
(22) Date of filing: 02.06.2021
(51) Int. Cl.: H04L 65/80, H04L 65/65

(54) **RESOLVING CALL-QUALITY ISSUES**
AUFLÖSUNG VON ANRUFQUALITÄTSPROBLEMEN
RÉSOLUTION DE PROBLÈMES DE QUALITÉ D'APPEL

(43) Date of publication of application: 27.03.2024
(73) Proprietor: Google LLC, Mountain View, CA 94043 (US)
(72) Inventor: RESMAN, Matt B., Mountain View, CA 94043 (US); GUNN, Tyler J., Mountain View, CA 94043 (US); AGRAWAL, Radhika, Mountain View, CA 94043 (US); RAMACHANDRAN, Amruth, Mountain View, CA 94043 (US); KRAUSE, David J., Mountain View, CA 94043 (US)
(74) Representative: Anderson, Oliver Ben
(86) International application number: PCT/US2021/035531
(87) International publication number: WO 2022/256009

(56) References cited:
- WO-A1-2021/011772
- GB-A- 2 488 120
- US-A1- 2002 184 373

## Description

### BACKGROUND

A computing device (e.g., a smartphone) may communicate through a communication network with another computing device. For example, a first computing device may connect to a second computing device through a wireless communication network for purposes of a real-time person-to-person media session (e.g., a call). Such network connections of devices through a communication network, however, are prone to issues that may reduce a quality of a call. These call-quality issues include, for example, a device suddenly losing power due to a low battery condition, a poor audio quality caused by a device located in a remote location, a poor video quality due to a congested network, and so forth. Users are often left to determine solutions for these call-quality issues on their own, which may require them to navigate the settings on their device in an attempt to resolve the issues. Users may become distracted while navigating or confused about how to resolve the issue, further reducing the effectiveness of the call and user experience. As a result, there are barriers preventing a user from communicating effectively with another user during a call.

GB 2 488 120 A discloses a method in a first communications device operable to communicate with a second device using a network supporting first (voice calls) and second different communication methods (e.g. video calls). The method comprises: allowing the first device to communicate with the second device using the first communication method; registering the first device on a service platform of the network; requesting from the service platform a second device status indicator of the ability of the second device to communicate using the second communication method; receiving the second device status indicator from the service platform; and, allowing the first device to communicate with the second device using the second communication method in dependence on the received second device status indicator, wherein the step of allowing the first device to communicate with the second device using the second communication method in dependence on the received second device status indicator includes displaying communication options for the second device to a user of the first device in accordance with the received second device status indicator. It is further disclosed that the second device status indicator may depend on communication method QoS. In an embodiment, the user may select a capable contact from his/her address book. When this happens, the device may perform an instant service capability check when displaying the available services. This may be implemented using SIP OPTIONS. The capabilities returned in response to an OPTIONS request represent the list of services that the client can access at a certain point of time. For example, the user may be allowed to chat or file share but be restricted from using video. Certain services may require a certain level of network quality of service. For example, streaming video over a 2G GPRS signal does not provide the adequate user experience.

### SUMMARY

The present invention is defined by the subject-matter of independent claims 1, 13 and 14. Further detailed embodiments are defined by the dependent claims.

This document describes techniques and devices for resolving call-quality issues. The techniques described herein utilize a computing device to establish a real-time person-to-person media session (herein referred to as a call, for short) with another device using a wireless communication network (e.g., an Internet Protocol Multimedia Core Network Subsystem (IMS) network). Through the wireless communication network, the computing device may exchange status messages with the other device during the call to communicate status information of at least one of the devices (e.g., a health of a device, quality of the call, quality of the network). Status messages may be exchanged between the devices during the call using, for instance, real-time transport protocol (RTP) header extensions or unused dual-tone multi-frequency (DTMF) digits (e.g., digits A, B, C, or D). A call-quality issue may be detected by a computing device using, in part, status information received in a status message from another device. Upon determining a call-quality issue, a computing device may generate a notification to be displayed to a user of the device to inform the user of the issue. A computing device may additionally determine a recommendation to help the user resolve the call-quality issue.

Aspects described below include techniques for resolving call-quality issues. An example method is performed by a first computing device and may include requesting registration in a wireless communication network and establishing a real-time person-to-person media session over the wireless communication network with a second computing device. The first computing device may receive a status message from the second computing device, which includes device health information of the second computing device, indicating a quality of the real-time person-to-person media session. Based on the device health information of the second computing device, the first computing device may determine a call-quality issue of the real-time person-to-person media session. A notification may be generated by the first computing device to inform a user of the first computing device of the call-quality issue of the real-time person-to-person media session. The first computing device may notify the user using the notification.

As will be appreciated, various examples described herein may serve to notify one or more parties to the call of the prevailing state of the connection/communication and/or a reason for a disconnection. In some examples, the notifications provided may form part of a human-machine interaction for efficiently resolving connection/communication issues between the two parties. Notifications that indicate a reason for a disconnection may, among other benefits, be informative of whether or not it is worthwhile attempting to re-initiate the connection.

This Summary is provided to introduce simplified concepts for resolving call-quality issues, which is further described below in the Detailed Description and Drawings. This Summary is not intended to identify essential features of the claimed subject matter, nor is it intended for use in determining the scope of the claimed subject matter.

### BRIEF DESCRIPTION OF DRAWINGS

The details of one or more aspects of techniques and devices for resolving call-quality issues are described with reference to the following diagrams:
FIG. 1 illustrates an example environment in which the techniques of resolving call-quality issues are performed by connected computing devices during a call;
FIG. 2 illustrates an example computing device that implements the techniques of resolving call-quality issues;
FIG. 3 illustrates an example handshake procedure that may be used to establish a device-to-device communication during a call;
FIG. 4 illustrates example status information that may be included in status messages to identify and resolve call-quality issues;
FIG. 5 illustrates example status sharing controls of the status module that permit user selection of privacy options;
FIG. 6 illustrates an example sequence of notifications displayed on the first device over time;
FIG. 7 illustrates an example sequence of recommendations displayed on a computing device for resolving call-quality issues;
FIG. 8 depicts an example method for resolving call-quality issues; and
FIG. 9 illustrates an example computing system embodying, or in which techniques can be implemented that enable use of, the techniques of resolving call-quality issues.

The use of same numbers in different instances throughout the drawings may reference like features and components.

### DETAILED DESCRIPTION

### Overview

Network connections (e.g., that enable audio calls, video calls) between computing devices are prone to call-quality issues that may reduce a quality of a call. These issues may include, for instance, a smartphone suddenly losing power due to low battery, audio disturbances associated with a poor signal of a smartphone in a remote location, latency of a video call due to a congested communication network, and so forth. A device user may often experience call-quality issues without understanding a cause of or a solution for the problem. For example, if a call unexpectedly drops, a user may be left wondering why the call ended and if their device is the source of the issue. Even if an issue is identified on a device, a user may want to know how to quickly resolve the issue. Users are often left to determine a solution to a call-quality issue on their own and then navigate their device to resolve the issue. Users may become distracted while navigating or confused about how to resolve the issue, further reducing the effectiveness of the call and user experience. As a result, there are barriers preventing a user from resolving call-quality issues.

To address these challenges, this document describes methods for resolving call-quality issues. In aspects, the resolution is performed in real-time. After establishing a call with another device, a computing device may exchange status messages with the other device to passively communicate (e.g., as perceived by a user) status information of one or more of the devices in real time. This status information may include, for instance, a status of a device (e.g., battery level), a quality of the call (e.g., connectivity strength), a quality of the wireless communication network (e.g., network traffic level), and/or relevant user inputs (e.g., settings, inputs). To exchange these status messages during a call, a device may establish a device-to-device communication with another device by performing operations of a handshake procedure using, for example, RTP header extensions and/or unused DTMF digits.

The device may use received status messages of a connected device on a call and/or local health of their own device to determine a call-quality issue pre-call (e.g., before a call), while placing a call, during a call, or post-call (e.g., after a call has dropped). After determining the call-quality issue, a computing device may resolve the issue by performing one or more of notifying a user of the device with detailed information of the issue, notifying the user of a recommendation for quickly resolving the issue, or transmitting a status message to another device on a call to inform a user of the other device of the call-quality issue. Recommendations may include additional functionality (e.g., shortcuts) that allows a user to quickly resolve the call-quality issue without navigating their device to perform operations. For instance, the recommendations may include one or more user-selectable options, selection of which may cause the device on which the recommendation is selected to perform the recommended action/operation.

### Example Environment

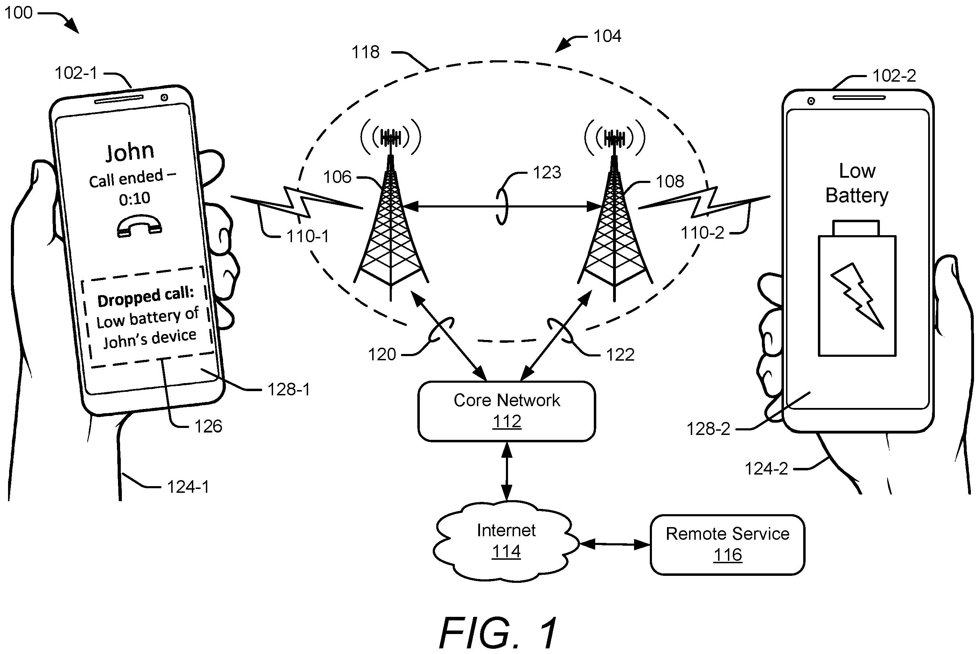

FIG. 1 illustrates an example environment 100 in which the techniques of resolving call-quality issues are performed by connected computing devices during a call. Example environment 100 includes a first computing device 102-1 (device 102-1) that communicates with a first base station 106 through one or more wireless communication links 110 (wireless link 110), illustrated as wireless link 110-1. The example environment 100 further includes a second computing device 102-2 (device 102-2) that communicates with a second base station 108 through one or more wireless links 110, illustrated as wireless link 110-2. For ease of description, the first device 102-1 and the second device 102-2 may be respectively referred to as a computing device 102 herein, and the first base station 106 and the second base station 108 are collectively illustrated as a base station 104.

A macrocell, microcell, small cell, picocell, distributed base station, and the like, or any combination or future evolution thereof, may implement the base station 104 (e.g., an Evolved Universal Terrestrial Radio Access Network Node B, E-UTRAN Node B, evolved Node B, eNodeB, eNB, Next Generation eNB, ng-eNB, Next Generation Node B, gNode B, gNB, a base station transceiver system, a Wireless Local Access Network (WLAN) router, a satellite, a terrestrial television broadcast tower, an access point, a peer-to-peer device, another computing device acting as a base station, or the like). The base stations 104 may communicate with the computing devices 102 using the wireless links 110, implemented as any suitable type of wireless link. The wireless links 110 may include control and data communication, such as downlink of data and control information communicated from the base stations 104 to the computing devices 102, uplink of other data and control information communicated from the computing devices 102 to the base stations 104, or both. The wireless links 110 may include one or more wireless links (e.g., radio links) or bearers implemented using any suitable communication protocol or standard, or combination of communication protocols or standards, such as 3rd Generation Partnership Project Long-Term Evolution (3GPP LTE), Fifth Generation New Radio (5G NR), and so forth.

The base stations 104 (first base station 106, second base station 108) are collectively a Radio Access Network 118 (e.g., RAN, Evolved Universal Terrestrial Radio Access Network, E-UTRAN, 5G NR RAN or NR RAN). The base stations 106 and 108 in the RAN 118 are connected to a core network 112 (e.g., IMS network supporting services that may interface with other networks for voice, images, videos, texts, messaging, and the like). The base stations 106 and 108 may connect, at 120 and 122 respectively, to the core network 112 through an NG2 interface for control-plane signaling using any one of an NG3 interface for user-plane data communications when connecting to a 5G core network, an S1 interface for control-plane signaling and user-plane data communications when connecting to an Evolved Packet Core (EPC) network, and the like. The base stations 106 and 108, at 123, may communicate using an Xn Application Protocol (XnAP) through an Xn interface, using an X2 Application Protocol (X2AP) through an X2 interface to exchange user-plane and control-plane data, and the like. A computing device 102 may connect, using the core network 112, to public networks, such as the Internet 114, to interact with a remote service 116.

The disclosed techniques of resolving call-quality issues may be performed by one or more of the first device 102-1 or the second device 102-2. In the example environment 100, the first device 102-1 utilizes a wireless link 110-1 to perform signaling and register to a real-time person-to-person media session to enable a call with the second device 102-2 through the base station 104. The call may be established over an IMS network and include, for example, an audio call, a video call, a connection on a shared server, a voice over long-term evolution (VoLTE) call, a voice over internet protocol (VoIP) call, a voice over 5G New Radio (VoNR) call, a voice over Wi-Fi^{®} (VoWiFi) call, and so forth. Establishment of the call enables a first user 124-1 to communicate with a second user 124-2, utilizing their respective computing devices 102. For ease of description, the first user 124-1 and the second user 124-2 may be respectively referred to as a user 124 herein.

In the example environment 100, the first device 102-1 and the second device 102-2 may exchange status messages during the call to identify and resolve call-quality issues. These call-quality issues may be associated with, for instance, one or more of network conditions (e.g., a congested network), a quality of a media session, a health status of a computing device 102 (e.g., a battery level), or one or more user inputs (e.g., intentional commands of a user 124, unintentional commands of a user 124).

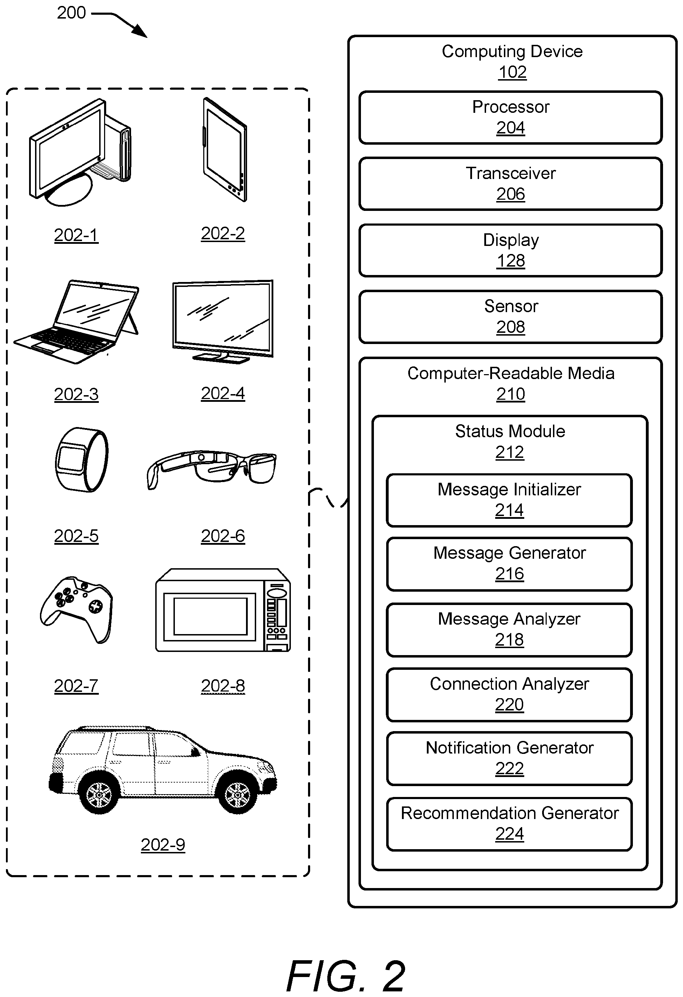

In example environment 100, a call between the first device 102-1 and the second device 102-2 unexpectedly drops as perceived by the first user 124-1. Using the techniques described herein, a notification 126 is displayed on the display 128-1 of the first device 102-1 to inform the first user 124-1 that the call may have dropped due to a low battery condition of the second device 102-2. In this example, the first device 102-1 may have detected the call-quality issue (e.g., the dropped call), determined a cause of the call-quality issue (e.g., a low battery condition of the second device 102-2) based on information received in a status messages from the second device 102-2, and notified the first user 124-1 with a notification 126 that included the cause of the call-quality issue. In general, the first device 102-1 may transmit a status message to the second device 102-2 regarding the detected call-quality issue, which may enable the second device 102-2 to notify the second user 124-2 of the issue. However, since the second device 102-2 has lost power in example environment 100, a notification may not be displayed on the display 128-2 of the second device 102-2 or received by the second device 102-2. For ease of description, display 128-1 and display 128-2 may be respectively referred to as a display 128 herein. While the example computing devices described in this publication are smartphones, other types of computing devices 102 may also support the techniques of resolving call-quality issues as further described with respect to FIG. 2.

### Example Computing Device

FIG. 2 illustrates an example computing device 102 that implements the techniques of resolving call-quality issues. The computing device 102 is illustrated with various non-limiting example devices, including a desktop computer 202-1, a tablet 202-2, a laptop 202-3, a television 202-4, a computing watch 202-5, computing glasses 202-6, a gaming system 202-7, a microwave 202-8, and a vehicle 202-9. Other devices may also be used, including a home-service device, a smart speaker, a smart thermostat, a security camera, a baby monitor, a Wi-Fi^{®} router, a drone, a trackpad, a drawing pad, a netbook, an e-reader, a home-automation and control system, a wall display, a virtual-reality headset, and/or another home appliance. The computing device 102 may be wearable, non-wearable but mobile, or relatively immobile (e.g., desktops, appliances).

The computing device 102 may include a processor 204 including, for example, one or more of a central processing unit (CPU), a data processing unit (DPU), a graphics processing unit (GPU), and so forth. The computing device 102 may also include one or more transceivers 206 used to receive and transmit signals. The transceiver 206 may be used to transmit status messages to another computing device and receive status messages from the other computing device. Though not illustrated in FIG. 2, the computing device 102 may alternatively include a receiver and a transmitter that are designated to receive signals from and transmit signals to another device, respectively.

The computing device 102 may include a display 128 and at least one sensor 208. In the example environment 100 of FIG. 1, the display 128 was used, in part, to display the notification 126 of the dropped call. In general, the display 128 may be used to view and/or control content of the computing device 102 including user settings, preferences, and so forth. The at least one sensor 208 may be used, in part, to determine a status of the computing device 102, for instance, using contextual information (e.g., haptic inputs, a location, detected motion, and so forth) associated with the computing device 102. A sensor 208 may include, for instance, a camera, a microphone, a speaker, an ambient light sensor, a biometric sensor, an accelerometer, a gyroscope, a magnetometer, a proximity sensor, a global navigation satellite system (GNSS) sensor, a touchscreen sensor, a health sensor, a barcode scanner, a quick response (QR) code scanner, a barometer, a radar sensor, and so forth.

The computing device 102 illustrated in FIG. 2 may also include a computer-readable medium (CRM) 210. Applications and/or an operating system (not illustrated) embodied as computer-readable instructions on the CRM 210 are executed by the processor 204 and may provide some of the functionalities described herein. The CRM 210 may receive information from the transceiver 206 and/or the sensors 208 as input to a status module 212 to determine call-quality issues. The CRM 210 may include instructions for directing the status module 212 of the computing device 102 to perform the techniques of resolving call-quality issues.

To enable an exchange of status messages during a call, a device-to-device communication may be established using a message initializer 214 of the status module 212. The message initializer 214 may establish the device-to-device communication by instructing a message generator 216 to generate a request message that may be transmitted to another device on the call using the transceiver 206. If the computing device 102 receives a response message using the transceiver 206, a message analyzer 218 of the status module 212 analyzes (e.g., decodes, translates) this message as input to the message initializer 214. Once the computing device 102 establishes the device-to-device communication with another device, the message generator 216 and message analyzer 218 may additionally be used to generate and analyze, respectively, status messages exchanged between the devices.

A connection analyzer 220 of the status module 212 may determine a call-quality issue based on information in a received status message from another device on a call and/or local health information of the computing device 102. Though not depicted, the status module 212 may determine the local health information using any one, or combination, of a user-input module (e.g., to detect one or more user inputs), a device-health module (e.g., to determine a health status of the computing device 102), a media-connection module (e.g., to determine a quality of the call through wireless links 110), or a communication-network module (e.g., to detect a condition of the core network 112) of the CRM 210. One or more of these modules (not depicted) may be implemented using hardware, software, firmware, or a combination thereof.

After the connection analyzer 220 determines a call-quality issue, a notification generator 222 may determine one or more notifications 126 used to alert a user of the device of the issue (e.g., using the first device 102-1 to notify the first user 124-1 on the display 128-1). The notification generator 222 may also determine one or more status messages to be transmitted (e.g., using the transceiver 206) to another device that includes status information associated with the call-quality issue. Upon receiving this status message at the other device, the other device may use a local status module 212 to perform similar operations of notifying a user of that device of the issue. Additionally, the status module 212 may use a recommendation generator 224 to determine one or more recommendations for resolving the call-quality issue. The recommendation generator 224 of the first device 102-1, for instance, may determine a recommendation and inform the first user 124-1 of that recommendation on the display 128-1.

### Establishing a Device-to-Device Communication

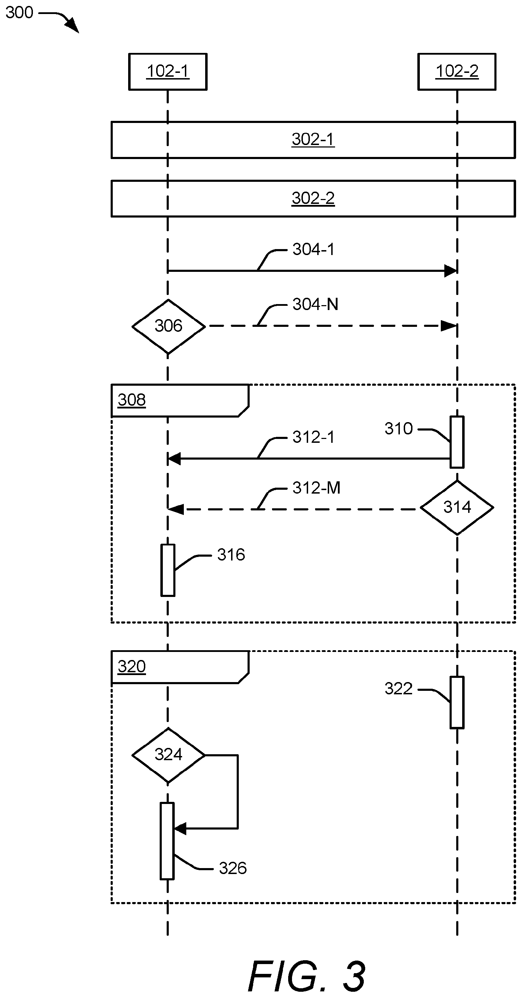

To enable the techniques of resolving call-quality issues, the computing device 102 may exchange status messages with a connected device during a call. This exchange of status messages (e.g., device-to-device communication) may be performed without a user 124 being directly involved (e.g., a passive exchange as perceived by the user 124). For example, the first device 102-1 may receive and/or transmit one or more status messages during the call with the second device 102-2, without either the first user 124-1 or the second user 124-2 performing the exchange directly. Upon detecting a call-quality issue (e.g., a dropped call), the first device 102-1 may display a notification 126 on the display 128-1 to notify the first user 124-1 of the call-quality issue based on, in part, information received in status messages from the second device 102-2. While the example computing devices 102 of the first device 102-1 and the second device 102-2 support this device-to-device communication, some computing devices 102 may not support such a message exchange. Therefore, a first device 102-1 may need to determine if a connected second device 102-2 supports a device-to-device communication before transmitting status messages, as further described with respect to FIG. 3.

FIG. 3 illustrates an example handshake procedure 300 that may be used to establish a device-to-device communication during a call. The example handshake procedure 300 is illustrated as a set of operations (or acts) performed by a system that includes the first device 102-1 and the second device 102-2. One or more of these computing devices 102 may utilize a respective status module 212 of that computing device 102 to enable the operations shown. The example handshake procedure 300 is not limited to the operations shown and may be rearranged, repeated, or eliminated as needed to enable techniques described herein. Two lifelines are depicted in 300 in which operations performed by the first device 102-1 are at least partially oriented about or emanate from the first lifeline and operations performed by the second device 102-2 are at least partially oriented about or emanate from the second lifeline.

While the example handshake procedure 300 may be performed by the message initializer 214 of the status module 212, in general, the example handshake procedure 300 may be performed by the processor 204, another module of the CRM 210, or any combination thereof. Operations of the example handshake procedure 300 may be performed prior to a call (pre-call), while placing a call (e.g., after a call has been initiated by a first device but before a second device is connected to the call), and/or during a call. After establishing the device-to-device communication, status messages may be exchanged while placing a call or during a call. In general, the device-to-device communication may be manually enabled or disabled on any device by a user based on, for instance, user needs. It is assumed in 300 that the first device 102-1 has enabled a device-to-device communication feature and is performing a handshake procedure to determine, in part, whether the second device 102-2 has also enabled this feature if supported by the device.

At a network-connection procedure 302-1, the first device 102-1 and the second device 102-2 establish a connection (e.g., using a wireless link 110) to a wireless communication network using one or more base stations (e.g., a base station 104), a common server, a peer-to-peer network, and/or a client-server model that enables the techniques described herein. The base stations 104 may enable connection to the core network 112 (e.g., an IMS network connection). For example, the first device 102-1 may request registration in an IMS network.

At a call-connection procedure 302-2, a real-time person-to-person media session (a call) is established between the first device 102-1 and the second device 102-2 upon establishing a connection to the wireless communication network. For example, the first device 102-1 may receive registration in the IMS network and then begin establishing an audio call with the second device 102-2. The call may include one or more of an audio call, a video call, a connection on a shared server, a VoLTE call, a VoIP call, a VoNR call, a VoWiFi call, and so forth.

The first device 102-1 may transmit a request message 304 (illustrated in 300 as a first request message 304-1). This request message 304 may include one or more binary digits (bits), a version of a messaging protocol (e.g., device-to-device communication) supported by the first device 102-1, a tone, a message, a set of instructions, and so forth, which may be transmitted to the connected second device 102-2. A message initializer 214 of the first device 102-1 may establish the device-to-device communication by instructing the first device 102-1 to transmit a request message 304 to the second device 102-2 using a transceiver 206 to determine whether the second device 102-2 supports an exchange of status messages.

The request message 304 may be generated by the message generator 216 and retransmitted over a duration of time (e.g., periodically every 40 milliseconds (ms)), because receipt of the request may not be guaranteed over a wireless communication network. During the duration of time, a first receipt-verification procedure 306 may be performed by the first device 102-1 to determine whether a response message 312 has been received from the second device 102-2. If a response message 312 has not been received at a given time within the duration of time, then the first device 102-1 may retransmit the request message 304 (illustrated in 300 as another request message 304-N, where N represents an integer value greater than unity that monotonically increases with every retransmission). The first device 102-1 may retransmit the request until either a response message 312 has been received by the first device 102-1 or the duration of time has expired. Retransmissions of the request message 304 may be performed continuously, periodically, at predetermined times, or intermittently over the duration of time based on user needs (e.g., conservation of battery charge).

The duration of time may be measured relative to a time at which the first request message 304-1 was transmitted from the first device 102-1. In particular, a timer may be triggered to an active state (e.g., triggering a start of the timer) upon transmitting the first request message 304-1. The timer (e.g., clocking system) may be used to count time within the duration of time and remain in the active state until the duration of time expires or a response message 312 is received from the second device 102-2. At the first receipt-verification procedure 306, the first device 102-1 may additionally determine whether the timer is in the active state or an inactive state (e.g., indicating the duration of time has expired). At a given time within the duration of time, if the timer is determined to be in the active state and a response message 312 has not been received, then the first device 102-1 may retransmit the request message 304.

In the example handshake procedure 300, a response process 308 may be performed, if the second device 102-2 supports the device-to-device communication. At a first acknowledgment procedure 310, the second device 102-2 may determine that the first device 102-1 supports the device-to-device communication, for instance, based on receiving the request message 304. If the second device 102-2 receives retransmitted request messages (e.g., 304-N) from the first device 102-1, then the second device 102-2 may ignore any additional requests that are similar to a first received request message 304. The second device 102-2 may store device-to-device communication settings of the first device 102-1 on the second device 102-2 (e.g., a CRM 210) for future reference.

The second device 102-2 may also transmit a response message 312 (illustrated in 300 as a first response message 312-1) to the first device 102-1 that includes one or more bits, a version of the messaging protocol supported by the second device 102-2, a tone, a message, a set of instructions, and so forth, which is similar to or distinct from the request message 304. Specifically, a transceiver 206 of the second device 102-2 may receive the request message 304 from the first device 102-1 and the message initializer 214 of the second device 102-2 may determine that the first device 102-1 supports the device-to-device communication. This message initializer 214 also may instruct a message generator 216 to generate a response message 312 that may be transmitted to the first device 102-1 using the transceiver 206 of the second device 102-2.

At a second receipt-verification procedure 314, the second device 102-2 may retransmit the response message 312 (illustrated in 300 as another request message 312-M, where M represents an integer value greater than unity that monotonically increases with every retransmission) over a second duration of time, because receipt of the response may not be guaranteed over the wireless communication network. The second device 102-2 may retransmit the response until either the device-to-device communication begins (e.g., a status message is received at the second device 102-2 from the first device 102-1) or the second duration of time has expired. Retransmissions of the response message 312 may be performed continuously, periodically, at predetermined times, or intermittently over the second duration of time based on user needs. The second duration of time may be similar to or distinct from the duration of time. A second timer may also be triggered into an active state upon transmission of the first response message 312-1. The second timer may be used to count time within the second duration of time and remain in the active state until the second duration of time expires or the device-to-device communication begins (e.g., a status message is received from the first device 102-1).

At a second acknowledgment procedure 316, the first device 102-1 may determine that the second device 102-2 supports the device-to-device communication based on, for instance, receiving the response message 312 within the duration of time. Upon making this determination, the first timer may be triggered to the inactive state by the first device 102-1. If the first device 102-1 receives retransmitted response messages (e.g., 312-M) from the second device 102-2, then the first device 102-1 may ignore any additional responses that are similar to a first received response message 312. The first device 102-1 may store device-to-device communication settings of the second device 102-2 on the first device 102-1 (e.g., a CRM 210) for future reference.

In general, the request message 304 and/or the response message 312 may be random, predetermined, encrypted (e.g., encoded for privacy), and/or include information about the transmitting device (e.g., an identifier). While operations associated with the first lifeline of the example handshake procedure 300 are described as performed by the first device 102-1 and operations associated with the second lifeline are described as performed by the second device 102-2, in general, the second device 102-2 may perform the operations of the first lifeline and the first device 102-1 may perform the operations of the second lifeline.

After determining that the second device 102-2 supports the device-to-device communication, the first device 102-1 and the second device 102-2 may begin exchanging status messages. In an example, status messages may be exchanged using the device-to-device communication, in part, to identify and resolve call-quality issues. Often times, a user may experience a call-quality issue without understanding a cause of or a solution for the problem. For instance, a call may unexpectedly drop, leaving a user wondering why the call ended and if their device is the source of the issue. Status messages may be exchanged during a call to communicate contextual information regarding connected devices that may address these types of call-quality issues. In the current example, a device may transmit a status message of "low battery" using the device-to-device communication to inform the other device of a low level of battery charge that may result in a dropped call. If the call unexpectedly ends, a user may better understand a cause of the dropped call from the information received in the status message (e.g., the other device lost power due to an insufficient level of battery charge).

Status messages may be transmitted at any time (e.g., periodically, at predetermined times, intermittently) by a transceiver 206 of a computing device 102 using the device-to-device communication upon instruction from the status module 212. Status messages may be generated by the message generator 216 and may be encrypted to prevent a third party (e.g., an entity distinct from the first device 102-1 and the second device 102-2) from accessing the status information of a device. Computing devices 102 may also receive status messages at any time at a transceiver 206 of a computing device 102. A message analyzer 218 may decode an encrypted message, translate information in a status message, and/or perform analysis procedures to understand the information in a status message.

In an example, the first device 102-1 detects a change in a battery charge level of the device, and a processor 204 instructs the status module 212 to communicate this change in status information of the first device 102-1 to the connected second device 102-2 during the call using the device-to-device communication. The message generator 216 of the first device 102-1 may generate a status message (e.g., of "low battery") to inform the second device 102-2 that the first device 102-1 has a low level of battery charge. The first device 102-1 may encrypt this status message to be transmitted by the transceiver 206 to the second device 102-2. The second device 102-2 may receive the encrypted message using a transceiver 206, and a message analyzer 218 of the second device 102-2 may decode the message as input to the connection analyzer 220.

A disabling process 320 may be performed if the second device 102-2 does not support the device-to-device communication. At a dismissal procedure 322, the second device 102-2 may ignore the request message(s) 304 from the first device 102-1. Even if the second device 102-2 is capable of supporting the device-to-device communication, a user 124 (e.g., the second user 124-2) may have disabled the feature on the second device 102-2. In this case, the second device 102-2 may still ignore the request message 304 as illustrated at the dismissal procedure 322.

At a time-verification procedure 324, the first device 102-1 determines that the duration of time has expired (e.g., using the timer) and a response message 312 has not been received from the second device 102-2. Based on this determination, the first device 102-1, at a third acknowledgment procedure 326, may determine that the second device 102-2 does not support the device-to-device communication and may disable or refrain from the exchange of status messages. The device-to-device communication feature may be disabled temporarily during this call and/or during future calls with the second device 102-2 using, for instance, stored settings of the second device 102-2 on the CRM 210 of the first device 102-1. This feature may be enabled again, for instance, when establishing a device-to-device communication with a third device.

Request messages 304, response messages 312, and status messages may utilize a message header (e.g., using RTP header extensions) and/or unused DTMF digits (e.g., digits of A-D). Using a message header or unused DTMF digits, the operations of the example handshake procedure 300 may be performed without modifying any existing standards (e.g., mechanical, software, network) and/or without requiring any changes to a carrier infrastructure (e.g., LTE, 5G NR, or wireless local area network). Furthermore, status messages may be exchanged between devices without being modified or blocked by a carrier network that operates a telecommunication system.

In an example, the device-to-device communication and handshake procedure may be performed using a message header that includes at least one RTP header extension. According to standards and specifications set by a 3GPP for telecommunication systems, many computing devices 102 support RTP data packets for delivering audio and video information over IP networks. An IMS network, for instance, may allow for multimedia services (e.g., calls, texts, RTP messages) to be delivered to another device using an IP network. In this example, the IMS network enables RTP data packets to be delivered from a first computing device (e.g., the first device 102-1) to a second computing device (e.g., the second device 102-2). RTP data packets may provide end-to-end network transport functions that enable real-time data transmission between computing devices 102 (e.g., media streaming, teleconference applications, and so forth). The operation of transmitting data using an RTP data packet may include structuring data into a data packet to enable quick delivery across an IP network. After receipt of the data packet, the data is reassembled into a smooth-flowing stream of data for a recipient computing device. The RTP data packet may include an RTP header that informs the recipient computing device of how to reassemble the data. The RTP header may include, for example, a header extension, a version of a protocol, padding bytes, contributing source identifications, markers, payload type information, sequence numbers, timestamps, and so forth.

RTP specifications require the recipient computing device to ignore RTP headers that are not understood. Since RTP headers carry independent information (e.g., distinct from an RTP payload), ignoring the RTP header does not affect the processing, decoding, or encoding of data (e.g., audio data, video data). Messages (e.g., including status information) may be included in an RTP header extension as a technique for transmitting data between computing devices 102. In the example handshake procedure 300, the first device 102-1 may transmit a request message 304 using an RTP header extension (e.g., an RTP request). The RTP request may include one or more bits of information including, for example, an identifier (ID), a length of the information, and data. Since delivery of RTP requests may not be guaranteed over a wireless communication network, the first device 102-1 may retransmit the RTP request over a duration of time (e.g., every 20-40 ms depending on bundling). If a response message 312, which uses an RTP header extension (e.g., an RTP response), is received at the first device 102-1 within the duration of time, then the first device 102-1 may refrain from retransmitting the RTP request. In some cases, RTP header extensions may be prioritized as a primary technique for exchanging status messages with respect to, for instance, unused DTMF digits.

During an exchange of messages between devices, RTP header extensions may contain information about the status of a computing device 102, for example, in bit arrays. For example, an RTP message included in an RTP header extension may include the bit array of [1011 0000 0001 0100], where the first quartet [1011] indicates the message refers to a device status, the second quartet [0000] refers to a payload length, the third quartet [0001] represents a sequence number that monotonically increases with every new RTP message, and the fourth quartet [0100] represents a message of "low battery" of the device. At any given time, each device may receive one or more RTP messages. A computing device 102 may ignore one or more RTP messages that are similar to a previous message received. As a result, a computing device 102 may use RTP messages to detect changes in a status of another computing device on the call using the techniques described herein.

An exchange of status messages is not limited to message headers that include RTP header extensions. The device-to-device communication and handshake procedure may be performed using unused DTMF digits. The standards and specifications set by 3GPP for telecommunications systems also indicate that many computing devices 102 may negotiate and support a use of DTMF signaling using fifteen digits (0-9, *, #, A, B, C, and D). While a user 124 may be restricted by only twelve digits (0-9, *, and #) on a keypad of a computing device 102, the additional unused DTMF digits A-D may be available for device-to-device communication.

In the example handshake procedure 300, the first device 102-1 transmits one or more request messages 304 using one or more unused DTMF digits. Requests may include, for example, a parameter identifier and a parameter value. Parameter identifiers may include base 3 encoded version numbers represented by digits A and/or B, which are terminated by digit D. Parameter values, for instance, may communicate a protocol version supported by the first device 102-1 to the second device 102-2. Digits A-C may be used in combination to identify a protocol version, while digit D identifies the termination of the parameter value. For example, the first device 102-1 transmits "AD" in a request message 304 to the second device 102-2 to communicate an IP version 1.0 supported by the first device 102-1. If the first device 102-1 determines that the second device 102-2 supports the device-to-device communication using unused DTMF digits, then the first device 102-1 may transmit combinations of letters A-D to communicate status information to the second device 102-2.

In an example, a DTMF message of "ABBAD" includes a first digit, "A," to identify a start of the sequence, and a fifth digit, "D," to identify an end of the sequence. The second, third, and fourth digits form an array [XYZ] and represent data of a status message, where X represents a parameter category, Y represents a parameter type, and Z represents a parameter value. The data of the status message "ABBAD" includes "BBA," where X="B" refers to a device status, Y="B" refers to a network coverage, and Z="A" refers to a quality of poor. The status message "ABBAD" indicates a device is experiencing poor network coverage. In general, the array of data may include any amount of digits less than or greater than three to form alternative arrays (e.g., an array of X, an array of UVWXYZ, and so forth). The unused DTMF digits may be prioritized as a secondary technique for exchanging status messages, with respect to RTP header extensions, to prevent congestion of a communication network. If unused DTMF digits are used to exchange messages, each device may refrain from playing a tone associated with the DTMF digits of A-D to improve a user experience.

The device-to-device communication may be disabled at any time by a computing device 102 if incompatibility conditions arise including, for example, an emergency call, a solicitor call, a conference, an active state of a single radio voice continuity (SRVCC) is detected, and so forth. In these instances, the other connected device (e.g., a landline phone of an emergency operator) often does not support an exchange of status messages during a call and may not benefit from the techniques described herein.

The handshake procedure illustrated in FIG. 3 may also be simplified if both devices (e.g., the first device 102-1 and the second device 102-2) are on a shared server. In this case, the first device 102-1 connects to a shared server and determines that the second device 102-2 is also connected to the shared server. The two devices may begin exchanging status messages over the shared server.

### Determining a Call-Quality Issue

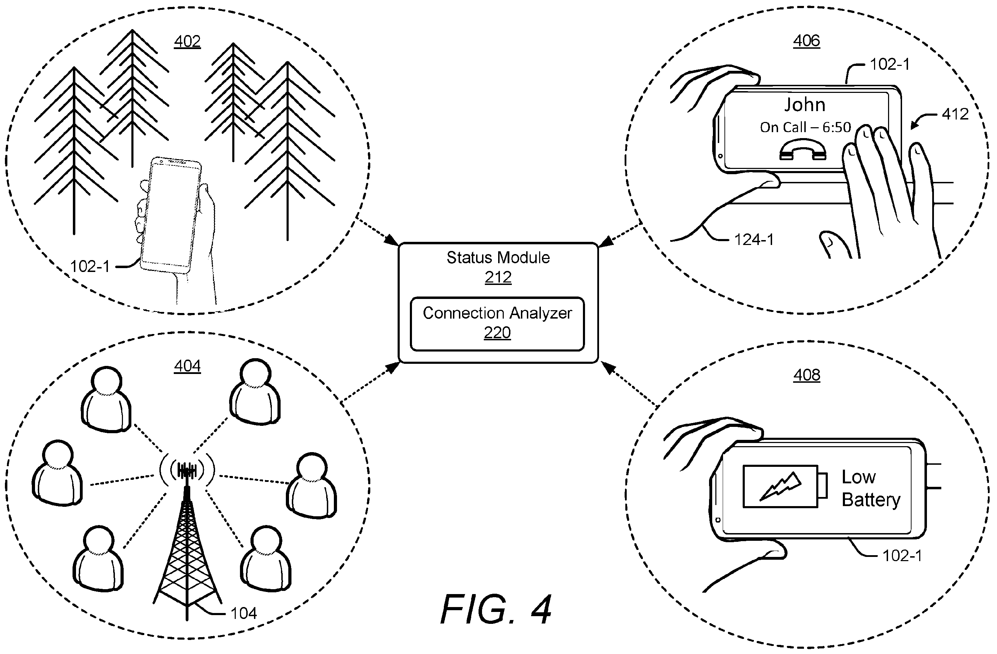

Status messages may include status information regarding one or more of, for example, a condition of the wireless communication network (e.g., a condition of the IMS network), a quality of the call (e.g., audio quality), a health status of one or more devices on a call (e.g., battery level), inputs from a user of a device (e.g., haptic inputs, commands, user settings), custom messages, and so forth as further described with respect to FIG. 4. This status information may be determined using, for instance, information exchanged in status messages, analysis of received status messages (performed by the connection analyzer 220), information collected by one or more sensors 208, one or more additional modules (not illustrated) of the CRM 210, and so forth. Status information included in status messages may additionally include information regarding one or more of a distorted audio/video signal, an echo, an intermittent audio/video signal, silence, changes in volume or clarity of an audio signal, reduced resolution of a video signal, delayed audio/video (e.g., latency, lag), audio/video interference or static noise, background noise, unintentional user inputs, one or more user settings, user commands, haptic inputs, voice inputs, gesture inputs, stored information that has been selected by the user to share with the other device (e.g., travel information, calendar events), a battery level, active or inactive states of one or more sensors, a mute status of a microphone, a mute status of a speaker, and so forth. The status information may also include an activity of a user (e.g., walking) as determined using an accelerometer, a location of the device as determined by a location sensor, emergency information (e.g., a car crash) as determined by motion sensors, and so forth.

A user 124 of a computing device 102 may be provided with controls allowing the user 124 to make an election as to both if and when systems, applications, and/or features described herein may enable the collection of user information and/or device information (e.g., preferences, stored information, a current location of the device), and if the user 124 is sent content and/or communications from a server. In addition, certain data may be treated in one or more ways before it is stored and/or used so that personally identifiable information is removed. For example, the identity of a user 124 may be treated so that no personally identifiable information can be determined for the user 124. In another example, the geographic location of the user 124 may be generalized where location information is obtained (e.g., to a city, zone improvement plan (ZIP) code, or state level), so that a particular location of a user 124 cannot be determined. Thus, the user 124 may have control over what information is collected, how that information is used, and what information is provided to devices on a call. The information in status messages may also be used by software applications (e.g., a phonebook application) of one or more computing devices 102 to improve a user experience.

FIG. 4 illustrates example status information that may be included in status messages to identify and resolve call-quality issues. Examples of status information are illustrated at example environments 402, 404, 406, and 408, which may be used by the connection analyzer 220 of the status module 212 to determine call-quality issues. Status information may be linked to other applications or programs on the computing device 102 (e.g., shared with a phonebook application, messaging application, and so forth).

At example environment 402, the first device 102-1 has been moved to a remote location (e.g., a forest), far from a base station (e.g., 104), during a call with the second device 102-2, resulting in a poor connectivity of the first device 102-1. The status module 212 may transmit status information regarding the poor connectivity of the first device 102-1 to the second device 102-2 to enable a status module 212 of the second device 102-2 to determine a call-quality issue. The connection analyzer 220 of the first device 102-1 and/or second device 102-2 may determine a call-quality issue associated with the poor connectivity of the first device 102-1, for instance, by identifying a change in a quality of the connectivity of the device (e.g., from average to poor) when compared to a previous quality of the connection (e.g., in a less-remote location). In particular, the connection analyzer 220 may determine that the poor qualification of the connectivity exceeds a predetermined threshold associated with call-quality issues. In general, the connection analyzer 220 may determine this call-quality issue by identifying one or more of changes in the connectivity of the device over time, connectivity levels that may exceed predetermined or variable thresholds, status information in a received status message from the second device 102-2 regarding a quality of the call, and so forth.

At example environment 404, a base station 104 is connected to a large number of user devices, resulting in a congested network. If the first device 102-1 establishes a network connection using this base station 104, then one or more call-quality issues may occur, resulting in, for instance, latency of audio/video content or a dropped call. Based on inputs from, for instance, sensors 208 regarding a current quality of the wireless communication network, the connection analyzer 220 may identify a call-quality issue associated with the congested network. The first device 102-1 may identify this issue before, for instance, a call is placed with the second device 102-2. By identifying this call-quality issue before a call is attempted, the first device 102-1 may better inform the first user 124-1 regarding a likeliness for a successful call.

At example environment 406, the first user 124-1 is on a call with the second user 124-2 (e.g., John), and the first user 124-1 begins to unintentionally distort the audio of the call by partially covering a microphone 412 of the first device 102-1 with their hand. The first device 102-2 may use the connection analyzer 220 to determine a call-quality issue associated with this audio distortion. In particular, a sensor 208 (e.g., a touch sensor, a radar sensor, an ultrasonic sensor, an ambient light sensor) of the first device 102-1 may detect this occlusion of the microphone 412 as input to the status module 212. The connection analyzer 220 may determine that the occlusion of the microphone 412 by the first user's hand is causing the audio distortions. The message generator 216 may generate one or more status messages to communicate this status information to the second device 102-2 to enable the second device 102-2 to locally determine the call-quality issue associated with the audio distortions.

At example environment 408, the first device 102-1 has a low battery that may result in a dropped call with the second device 102-2. Based on inputs to the status module 212 (e.g., battery level charge information) the connection analyzer 220 determines that a call-quality issue (e.g., a dropped call) may occur due to the low battery, and the status module 212 begins exchanging status messages with the other device to communicate this call-quality issue.

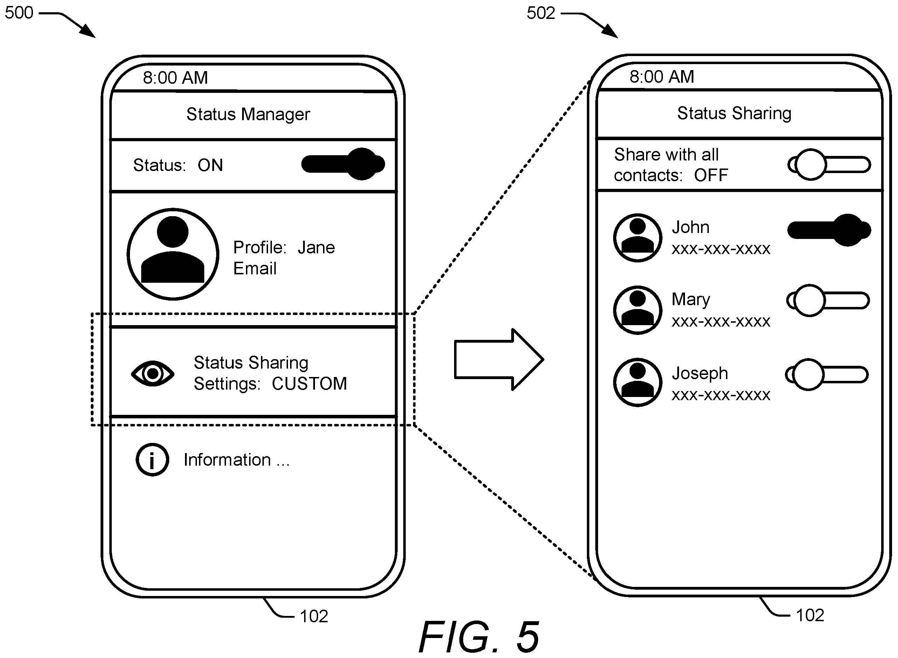

In general, the connection analyzer 220 may determine a call-quality issue by identifying one or more of changes in the health of the device, device health levels that may exceed predetermined or variable thresholds (e.g., battery levels), and so forth using status information of the first device 102-1 and/or status information of the second device 102-2 as received in a status message. The connection analyzer 220 may also determine a call-quality issue using information from received status messages, status information of a local device, and/or a machine-learned (ML) model. The ML model may predict issues at a local device based on a history of call-quality issues experienced by the device. The ML model may be a standard neural-network-based model with corresponding layers required for processing input features like fixed-side vectors, text embeddings, or variable-length sequences. The ML model may be implemented as one or more of a support vector machine (SVM), a recurrent neural network (RNN), a convolutional neural network (CNN), a dense neural network (DNN), one or more heuristics, other machine-leaming techniques, a combination thereof, and so forth. The ML model may be trained to predict call-quality issues based on a status history of one or more devices on a call. The status history may include one or more status messages received from another device and/or local status information of the device. To protect the status information of a user 124, privacy settings are described with respect to FIG. 5.

FIG. 5 illustrates example status sharing controls of the status module 212 that permit user selection of privacy options. At example environment 500, the status module 212 provides an option for users to opt in or out of the device-to-device communication. If a user 124 opts out, a dismissal procedure 322 may be performed by a computing device 102 if another connected device attempts to establish a device-to-device communication. If the user 124 opts into the device-to-device communication, then the user 124 may be provided with additional controls to modify the information shared with the other device. At example environment 502, the user 124 may custom select information shared with contacts during the call. If the user 124 opts out of sharing information with all contacts (as illustrated in 502), then the user 124 may customize their sharing settings for individual contacts. For example, the user 124 may select specific contacts (e.g., John) with whom to share information during a call. Though not depicted, the user 124 may also be provided with controls to monitor the information collected by the status module 212 and set preferences for information stored on the computing device 102 over time.

After the connection analyzer 220 determines a call-quality issue, the status module 212 may perform additional operations to resolve the call-quality issues. In particular, the status module 212 may notify a user of a local device of the call-quality issue using the notification generator 222. In general, a notification 126 may include details about the call-quality issue (e.g., noise detected), relevant status information of each device, a cause of the call-quality issue, and/or a source of the issue. It will therefore be appreciated that certain notifications 126 may be representative of the prevailing state of the system (e.g., the two devices and the connection therebetween) and may enable one or both parties to the connection to better understand why a call-quality issue has occurred. This may allow call-quality issues to be resolved more efficiently and/or improve the user experience. Other notifications 126 may indicate to the user the technical circumstances/state of the system which led to the call being dropped. Among other things, such notifications 126 may be informative for the user 124 in determining whether to attempt re-initiation of the call. For instance, a notification 126 which indicates that the call may have dropped due to a low battery condition of the second device 102-2 may indicate to the first user 124-1 that it is not worth attempting to re-initiate the media session immediately. In contrast, a notification 126 which indicates that some temporary/unexplained anomaly caused the call to drop may inform the first user 124-1 that it is worthwhile to attempt to reinitiate the call.

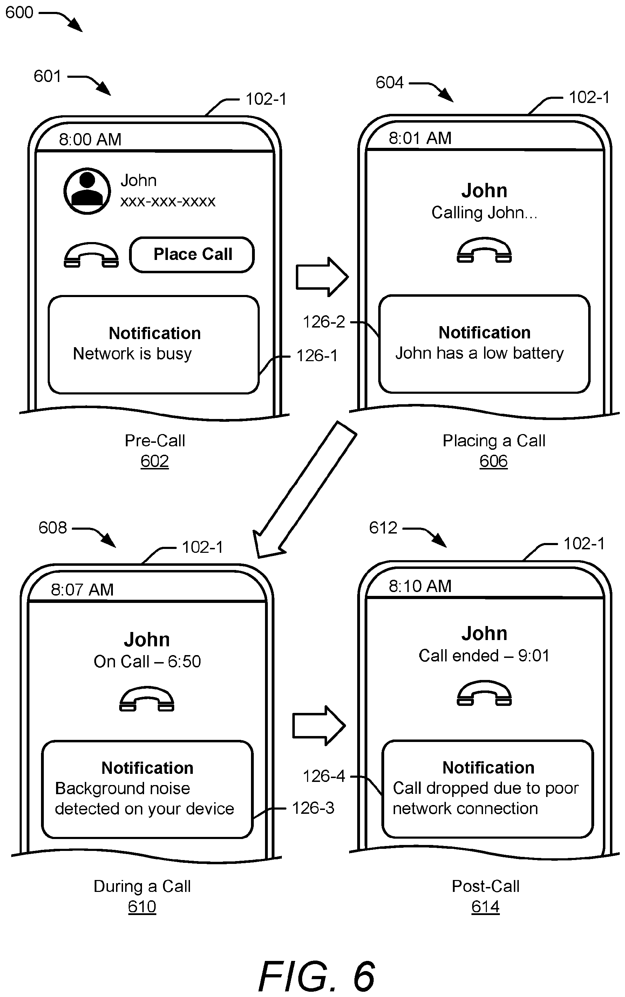

FIG. 6 illustrates an example sequence 600 of notifications 126 displayed on the first device 102-1 over time. In this example, the first user 124-1 wants to call the second user 102-2 (e.g., John) and notified as call-quality issues arise over time. While notifications 126 of 600 are visually displayed on the display 128-1, in general, notifications 126 may also include a sound (e.g., a tone), vibration, or additional visual cue (e.g., a light) to alert the first user 124-1 of the notification 126.

At example environment 601, the first device 102-1 may display a notification 126-1 before a call is established (e.g., pre-call 602) to indicate that the "network is busy." In 601, the status module 212 may use inputs regarding a quality of the wireless communication network to determine that the network is currently congested (with reference to example environment 404). In general, notifications 126 may include, for instance, information regarding a source of the issue (e.g., the network) and a cause of the issue (e.g., network congestion).

At example environment 604, however, the first user 124-1 decides to make the call (e.g., placing a call 606). Though not depicted, the first device 102-1 may receive status messages from the second device 102-2 during this time (after performing the handshake procedure). In this example, the first device 102-1 receives a status message from the second device 102-2 that indicates John's phone has a low battery (with reference to example environment 408). The connection analyzer 220 determines that this low battery condition qualifies as a call-quality issue and instructs the notification generator 222 to generate a notification 126-2 for display. The notification 126-2 informs the first user 124-1 that "John has a low battery," and the first user 124-1 may infer that John may not be able to successfully establish or maintain a call until the battery of the second device 102-2 is charged more sufficiently.

At example environment 608, however, a call is established with John. During a call 610, the first user 124-1 may unintentionally create background noise by rubbing their hand near a microphone of the device (with reference to example environment 406). The connection analyzer 220 may use local inputs (e.g., from sensors 208 of the first device 102-1) and/or status messages from the second device 102-2 indicating a call-quality issue, to determine that a call-quality issue (e.g., unwanted background noise) has occurred. The status module 212 may use the notification generator 222 to generate another notification 126-3 of "background noise detected on your device" to notify the first user 124-1.

At example environment 612, the call is dropped due to a poor network connection (with reference to example environment 402). The connection analyzer 220 may use local status information of the first device 102-1 (e.g., network connection information associated with the first device 102-1) and/or most recently received status messages from the second device 102-2 (e.g., a most recent status message received during a call 610 before the call dropped), to determine this call-quality issue. A notification 126-4 appears post-call 614 (e.g., after the call ended) that indicates "call dropped due to poor network connection" to help the first user 124-1 better understand why the call dropped.

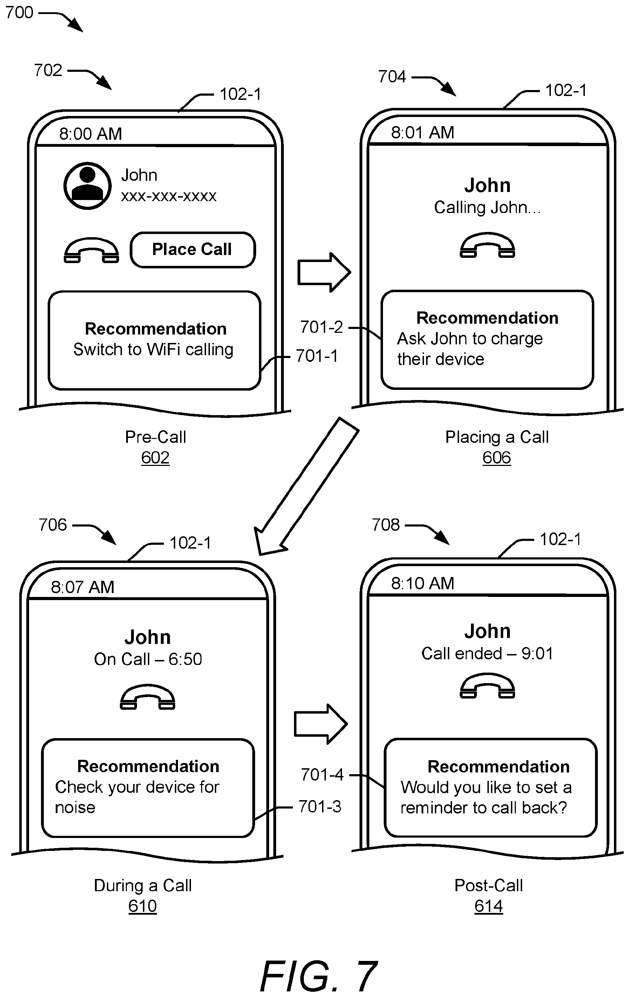

While the example notifications 126 of 600 were used to notify the user of a source and cause of a call-quality issue, a user 124 may want to know how to resolve this issue. The status module 212 may use a recommendation generator 224 to determine a best solution to resolve this issue as further described with respect to FIG. 7.

### Resolving Call-Quality Issues

FIG. 7 illustrates an example sequence 700 of recommendations 701 displayed on a computing device 102 for resolving call-quality issues. The example sequence 700 includes example environments 702, 704, 706, and 708, which correspond to example environments 601, 604, 608, and 612, respectively. Recommendations 701 may include one or more suggested actions that a user 124 may perform to help resolve call-quality issues as determined by a recommendation generator 224 of the status module 212. The recommendation generator 224 may determine potential solutions to call-quality issues based on preset solutions, an internal logic system, hysteresis logic, or an ML model. Potential solutions may be contingent upon a current status of one or more devices (e.g., user settings and/or an active or inactive state of one or more sensors, applications, or programs). For example, if a user 124 is connected to a wireless local area network, the recommendation generator 224 may include this setting when determining a recommendation 701.

At a first time, the first user 124-1 (e.g., Jane) intends to place a call with a second user 124-2 (e.g., John), but the status module 212 determines the network is busy. A notification 126-1 (illustrated at 601) warns Jane of the congested network and, at example environment 702, a recommendation 701-1 suggests switching to Wi-Fi^{®} calling. In this example, the recommendation 701-1 was shown separately from the notification 126-1 of example environment 601. The notification 126-1 and the recommendation 701-1, however, may appear simultaneously (e.g., as one message or separate messages to Jane) or appear at different times on the display 128-1. Recommendations 701 may appear for a period of time until either the call-quality issue is resolved or the period of time has expired. If the recommendation 701 is displayed at a different time from a time of the notification 126 being displayed, then a ring tone or a vibration may be triggered to alert a user 124 of the recommendation 701. Though not illustrated, each recommendation 701 may also provide shortcuts for quick access to relevant user settings, applications, or programs. For instance, the recommendation 701-1 of 702 may include a shortcut (e.g., icon, button, link) to quickly activate Wi-Fi^{®} calling instead of requiring Jane to navigate the first device 102-1 to activate the correct settings. It will therefore be appreciated that, in some examples, a user selection in respect of a recommendation 701 (e.g., the shortcut included in the recommendation 701) may cause the recommended action/operation to be performed by the device (or, put another way, the device may respond to a user selection in respect of the recommendation 701 by causing performance of the recommended action/operation).

At a second time, the first device 102-1 is placing a call 606 with a second device 102-2, and the status module 212 determines the second device 102-2 has a low battery. At example environment 704, a recommendation 701-2 appears on the first device 102-1, which suggests asking John to charge their device. Though not depicted, this recommendation 701-2 may include a shortcut that allows Jane to quickly transmit a text message of the recommendation 701-2 to John without requiring Jane to, for instance, create a text message, transcribe the recommendation 701-2 into the text message, and send the text message to John.

At a third time, the first device 102-1 is on a call with the second device 102-2, and a notification 126-3 informs Jane that background noise has been detected on the first device 102-1. At example environment 706, a recommendation 701-3 suggests to Jane to check their device for noise. Using inputs from one or more sensors 208, the recommendation 701-3 may include more detailed instructions (e.g., check the microphone is clear of obstructions). If a call-quality issue is associated with the microphone or speaker, for instance, the recommendation 701-3 may include a shortcut (not depicted) to allow Jane to quickly perform a microphone or speaker test (e.g., a calibration, reconfiguration).

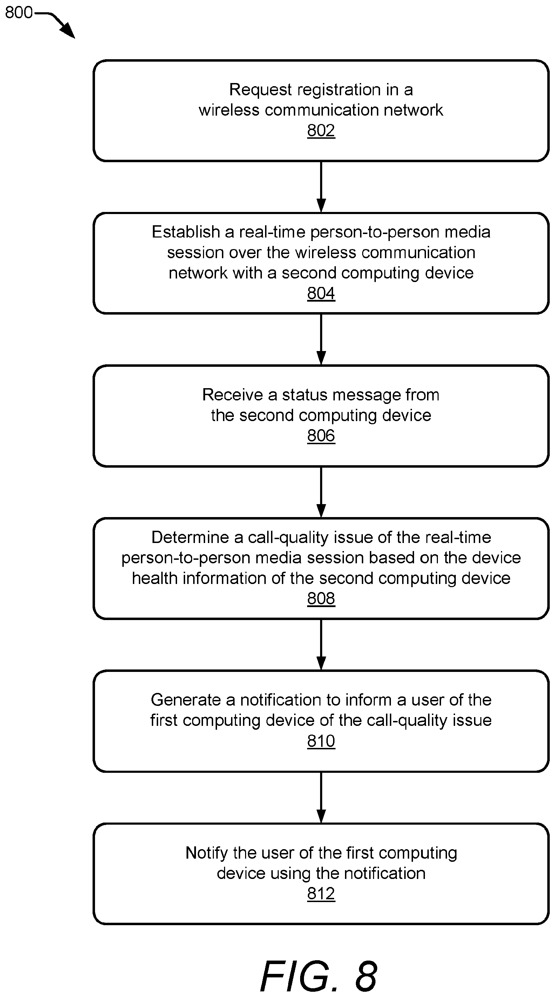

At a fourth time, the call with the second device 102-2 has dropped due to a poor network connection. At example environment 708, a recommendation 701-4 prompts Jane to set a reminder to call John back at a later time. It may be inferred that this recommendation 701-4 suggests Jane should call back at a later time. Though not depicted, the recommendation 701-4 may include a shortcut to quickly set a reminder for a later time. When setting a reminder, the status module 212 may utilize stored information (e.g., calendar events) to optimize a time to call back. For example, if Jane opts into sharing stored calendar events with the status module 212 (e.g., using the privacy settings described with respect to FIG. 5), then the recommendation generator 224 may suggest a future time to call back that does not conflict with planned events in Jane's calendar. Other recommendations 701 may include a user-selectable option for contacting John by a different method of communication (e.g., by email or a text message) or for contacting John using a different device (e.g., using a different number, handset, landline). When such a recommendation is selected by the user 124, the device may perform or assist the user 124 in performing the recommended action (e.g., by opening an email or messaging application, for instance, with John pre-selected as the recipient). The techniques for resolving call-quality issues are not limited to the examples illustrated in FIG. 7, and these techniques are more generally described with respect to FIG. 8.

### Example Methods

FIG. 8 depicts an example method 800 for resolving call-quality issues. Method 800 is illustrated as sets of operations (or acts) performed and is not necessarily limited to the order or combinations in which the operations are illustrated herein. Furthermore, any of one or more of the operations can be repeated, combined, reorganized, or linked to provide a wide array of additional and/or alternative methods. In portions of the following discussion, reference may be made to environments and entities detailed in FIGs. 1-7, reference to which is made for example only. The techniques are not limited to performance by one entity or multiple entities operating on one computing device 102. Furthermore, the example method 800 may be performed by any computing device 102 on a call.

At 802, a first computing device requests registration in a wireless communication network. For example, the first device 102-1 establishes a network connection (e.g., using wireless links 110) to a core network 112 using base stations 104 as depicted in the example environment 100 of FIG. 1. The core network 112 may include IMS network supporting services that may interface with other networks for voice, images, videos, texts, messaging, and the like.

At 804, the first computing device establishes a real-time person-to-person media session over the wireless communication network with a second computing device. For example, the first device 102-1 establishes a call over the IMS network with the second device 102-2. The call may include, for example, an audio call, a video call, a connection on a shared server, a VoLTE call, a VoIP call, a VoNR call, a VoWiFi call, and so forth. In FIG. 1, both the first device 102-1 and the second device 102-2 support the device-to-device communication (e.g., exchange of status messages) during the call. The first device 102-1, however, may determine if the second device 102-2 supports the device-to-device communication using the example handshake procedure 300 of FIG. 3.

At 806, the first computing device receives a status message from the second computing device. For example, the first device 102-1 receives a status message at a transceiver 206 from the second device 102-2 using the device-to-device communication established during the handshake procedure. This status message may include status information (e.g., device health information) about the second device 102-2 to enable the first device 102-1 to identify and resolve call-quality issues.

At 808, a call-quality issue of the real-time person-to-person media session is determined by the first computing device based on the device health information of the second computing device. For example, a call-quality issue of the call is determined by a connection analyzer 220 of a status module 212 of the first device 102-1 based on the status information of the second device 102-2 received in the status message. In particular, the connection analyzer 220 may determine a cause and a source of the call-quality issue (e.g., the second device 102-2) to provide detailed information to the first user 124-1. Determining call-quality issues based on, in part, status information received in a status message is described in detail with respect to FIG. 4.

At 810, the first computing device generates a notification to inform a user of the first computing device of the call-quality issue. For example, a notification generator 222 of the status module 212 of the first device 102-1 generates a notification 126 to inform the first user 124-1 of the call-quality issue. Example notifications 126 are illustrated in the example sequence 600 of FIG. 6.

At 812, the first computing device notifies the user of the first computing device using the notification. For example, the first device 102-1 notifies the first user 124-1 by, for instance, displaying the notification 126 on the display 128-1, playing a tone to alert the first user 124-1, and/or triggering additional visual alerts (e.g., lights) of the first device 102-1.

### Example Computing Systems

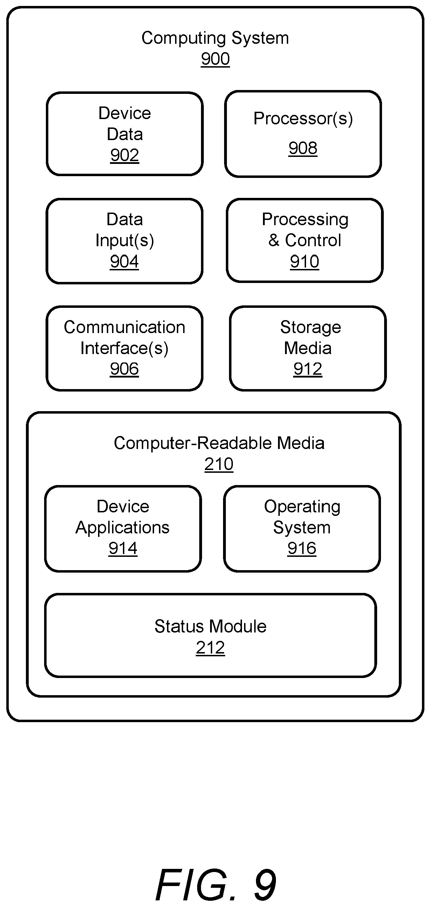

FIG. 9 illustrates an example computing system 900 embodying, or in which techniques can be implemented that enable use of, the techniques of resolving call-quality issues. The example computing system 900 can be implemented as any type of client, server, and/or computing device as described with reference to FIG. 2.

The computing system 900 may include device data 902 (e.g., received data, data that is being received, data scheduled for broadcast, data packets of the data). The device data 902 or other device content may include configuration settings of the device, media content stored on the device, and/or information associated with a user of the device. Media content stored on the computing system 900 may include any type of audio, video, text, and/or image data. The computing system 900 may include one or more data inputs 904 by which any type of data, media content, and/or inputs may be received, including user-selectable inputs (explicit or implicit), messages, music, television media content, recorded video content, and any other type of audio, video, text, and/or image data received from any content and/or data source.

The computing system 900 may also include communication interfaces 906, which may be implemented as any one or more of a serial and/or parallel interface, a wireless interface, any type of network interface, a modem, and any other type of communication interface. The communication interfaces 906 may provide a connection and/or communication links between the computing system 900 and a communication network by which other electronic, computing, and communication devices communicate data with the computing system 900.

The computing system 900 may include one or more processors 908 (e.g., any of microprocessors, controllers, and the like), which process various computer-executable instructions to control the operation of the computing system 900 and to enable techniques for, or in which can be embodied, resolving call-quality issues. Alternatively, or in addition, the computing system 900 may be implemented with any one or combination of hardware, firmware, or fixed logic circuitry that is implemented in connection with processing and control circuits, which are generally identified at 910. Although not shown, the computing system 900 may include a system bus or data transfer system that couples the various components within the device. A system bus may include any one or combination of different bus structures, including a memory bus or memory controller, a peripheral bus, a universal serial bus, and/or a processor or local bus that utilizes any of a variety of bus architectures.

The computing system 900 may additionally include computer-readable media 210, including one or more memory devices that enable persistent and/or non-transitory data storage (e.g., in contrast to mere signal transmission), examples of which include random access memory (RAM), non-volatile memory (e.g., any one or more of a read-only memory (ROM), flash memory, EPROM, EEPROM, and so forth), and a disk storage device. The disk storage device may be implemented as any type of magnetic or optical storage device, including a hard disk drive, a recordable and/or rewriteable compact disc (CD), any type of a digital versatile disc (DVD), and the like. The computing system 900 may also include a mass storage media device (storage media) 912.

The computer-readable media 210 may provide data storage mechanisms to store the device data 902, as well as various device applications 914 and any other types of information and/or data related to operational aspects of the computing system 900. For example, an operating system 916 is maintained as a computer application with the computer-readable media 210 and executed on the processors 908. The device applications 914 may include a device manager, including any form of a control application, software application, signal-processing and control module, code that is native to a particular device, a hardware abstraction layer for a particular device, and so on. Using the status module 212 of the computer-readable media 210, the computing system 900 may identify and resolve call-quality issues during a call.

### Conclusion

Although techniques and devices for resolving call-quality issues have been described in language specific to features and/or methods, it is to be understood that the invention is solely defined by the subject of the appended claims.

## Claims

1. A method (900) performed by a first computing device (102-1), the method comprising:
requesting registration (902) in wireless communication network;
responsive to receiving registration in the wireless communication network, establishing (904) a real-time person-to-person media session over the wireless communication network with a second computing device (102-2);
receiving (906) a status message from the second computing device, the status message including device health information of the second computing device, the device health information indicating a quality of the real-time person-to-person media session;
determining (908) a call-quality issue of the real-time person-to-person media session based on the device health information of the second computing device;
responsive to determining the call-quality issue of the real-time person-to-person media session, generating (910) a notification to inform a user of the first computing device of the call-quality issue of the real-time person-to-person media session; and
notifying (912) the user of the first computing device using the notification;
the method further comprising:
utilizing the device health information of the second computing device to determine a cause of the call-quality issue of the real-time person-to-person media session;
determining, utilizing the cause, a recommendation to enable the user of the first computing device to resolve the call-quality issue, the recommendation comprising a recommended task for the user to perform; and
notifying the user of the first computing device of the recommendation, wherein the recommendation comprises a shortcut to expedite execution of the recommended task for the user to perform.

2. The method as recited by any preceding claim, the method further comprising:
determining a device health information of the first computing device;
determining a second call-quality issue of the real-time person-to-person media session based on the device health information of the first computing device;
responsive to determining the second call-quality issue of the real-time person-to-person media session, generating a second notification to inform the user of the first computing device of the second call-quality issue of the real-time person-to-person media session; and
notifying the user of the first computing device of the second call-quality issue of the real-time person-to-person media session.

3. The method as recited by claim 2, the method further comprising:
responsive to determining the second call-quality issue of the real-time person-to-person media session, generating a second status message that includes the device health information of the first computing device; and
sending the second status message to the second computing device to enable a user of the second computing device to be notified of the second call-quality issue.

4. The method as recited by claim 3, the method further comprising encoding the second status message to prevent a third party from accessing the status information of the first computing device, the third party distinct from the first computing device and distinct from the second computing device.

5. The method as recited by any of claims 2-4, wherein the determining of the device health information of the first computing device comprises at least one of:
determining a condition of the wireless communication network;
determining a quality of the real-time person-to-person media session;
determining a health status of the first computing device at a present time; or
detecting at least one input to the first computing device from the user.

6. The method as recited by any of claims 2-5, the method further comprising:
utilizing contextual information obtained from at least one sensor of the first computing device to enable the determination of the device health information of the first computing device.

7. The method as recited by any of claims 2-6, the method further comprising:
determining a change in the status information of the first computing device at a current time when compared to the status information of the first computing device at an earlier time;
generating a third status message to send to the second computing device based on the determined change in the status information of the first computing device; and
sending the third status message to the second computing device to enable the second computing device to resolve call-quality issues of the real-time person-to-person media session.

8. The method as recited by any of claims 2-7, wherein the second call-quality issue is predicted using at least one of:
a machine-learned model;
an internal logic system; or
hysteresis logic.

9. The method as recited by any preceding claim, the method further comprising establishing a device-to-device communication to exchange status messages during the real-time person-to-person media session using a handshake procedure, the handshake procedure comprising:
sending a request message to the second computing device through the wireless communication network, the sent request message requesting an exchange of status messages between the second computing device and the first computing device; or
receiving a request message from the second computing device through the wireless communication network, the received request message requesting the exchange of status messages between the second computing device and the first computing device.

10. The method as recited by claim 9, wherein the handshake procedure further comprises:
responsive to sending a request message to the second computing device, receiving a response message from the second computing device through the wireless communication network, the received response message indicating that the second computing device supports the exchange of status messages between the second computing device and the first computing device; or
responsive to receiving a request message from the second computing device, sending a response message to the second computing device through the wireless communication network, the sent response message indicating that the first computing device supports the exchange of status messages between the second computing device and the first computing device.

11. The method as recited by any of claims 9 or 10, the method further comprising:
performing the handshake procedure to determine whether the second computing device supports the exchange of status messages between the second computing device and the first computing device using one or more dual-tone multi-frequency, DTMF, digits of A, B, C, or D;
generating a DTMF status message that includes status information of the first computing device, the DTMF status message using one or more DTMF digits of A, B, C, or D; and
sending the DTMF status message to the second computing device through the wireless communication network, responsive to determining that the second computing device supports the exchange of status messages between the second computing device and the first computing device using one or more DTMF digits of A, B, C, or D.

12. The method as recited by any of claims 10 or 11, the method further comprising:
performing the handshake procedure to determine whether the second computing device supports the exchange of status messages between the second computing device and the first computing device using Real-Time Transport Protocol, RTP, header extensions;
generating an RTP status message that includes status information of the first computing device, the RTP status message using an RTP header extension;
sending the RTP status message to the second computing device through the wireless communication network, responsive to determining that the second computing device supports the exchange of status messages between the second computing device and the first computing device using RTP header extensions.

13. A computing device (102) comprising:
at least one processor (204); and
computer-readable storage media (210) comprising instructions, responsive to execution by the processor, for directing the computing device to perform any one of the methods recited in claims 1-12.

14. Computer-readable instructions which, when executed by a processor of a computing device, direct the computing device to perform any one of the methods recited in claims 1-12.

## Patentansprüche

1. Verfahren (900), das von einer ersten Rechenvorrichtung (102-1) durchgeführt wird, wobei das Verfahren Folgendes umfasst:
Anfordern einer Registrierung (902) in einem drahtlosen Kommunikationsnetzwerk;
als Reaktion auf Empfangen der Registrierung in dem drahtlosen Kommunikationsnetzwerk, Aufbauen (904) einer Echtzeit-Person-zu-Person-Mediensitzung über das drahtlose Kommunikationsnetzwerk mit einer zweiten Rechenvorrichtung (102-2);
Empfangen (906) einer Statusnachricht von der zweiten Rechenvorrichtung, wobei die Statusnachricht Vorrichtungsgesundheitsinformationen der zweiten Rechenvorrichtung beinhaltet, wobei die Vorrichtungsgesundheitsinformationen eine Qualität der Echtzeit-Person-zu-Person-Mediensitzung angeben;
Bestimmen (908) eines Anrufqualitätsproblems der Echtzeit-Person-zu-Person-Mediensitzung basierend auf den Vorrichtungsgesundheitsinformationen der zweiten Rechenvorrichtung;
als Reaktion auf Bestimmen des Anrufqualitätsproblems der Echtzeit-Person-zu-Person-Mediensitzung, Erzeugen (910) einer Benachrichtigung, um einen Benutzer der ersten Rechenvorrichtung über das Anrufqualitätsproblem der Echtzeit-Person-zu-Person-Mediensitzung zu informieren; und
Benachrichtigen (912) des Benutzers der ersten Rechenvorrichtung unter Verwendung der Benachrichtigung;
wobei das Verfahren ferner Folgendes umfasst:
Nutzen der Vorrichtungsgesundheitsinformationen der zweiten Rechenvorrichtung, um eine Ursache des Anrufqualitätsproblems der Echtzeit-Person-zu-Person-Mediensitzung zu bestimmen;
Bestimmen einer Empfehlung unter Nutzung der Ursache, um es dem Benutzer der ersten Rechenvorrichtung zu ermöglichen, das Anrufqualitätsproblem aufzulösen, wobei die Empfehlung eine empfohlene Aufgabe umfasst, die der Benutzer durchzuführen hat; und
Benachrichtigen des Benutzers der ersten Rechenvorrichtung über die Empfehlung, wobei die Empfehlung eine Abkürzung umfasst, um die Ausführung der empfohlenen Aufgabe, die der Benutzer durchzuführen hat, zu beschleunigen.

2. Verfahren nach einem der vorhergehenden Ansprüche, wobei das Verfahren ferner Folgendes umfasst:
Bestimmen von Vorrichtungsgesundheitsinformationen der ersten Rechenvorrichtung;
Bestimmen eines zweiten Anrufqualitätsproblems der Echtzeit-Person-zu-Person-Mediensitzung basierend auf den Vorrichtungsgesundheitsinformationen der ersten Rechenvorrichtung;
als Reaktion auf Bestimmen des zweiten Anrufqualitätsproblems der Echtzeit-Person-zu-Person-Mediensitzung, Erzeugen einer zweiten Benachrichtigung, um den Benutzer der ersten Rechenvorrichtung über das zweite Anrufqualitätsproblem der Echtzeit-Person-zu-Person-Mediensitzung zu informieren; und
Benachrichtigen des Benutzers der ersten Rechenvorrichtung über das zweite Anrufqualitätsproblem der Echtzeit-Person-zu-Person-Mediensitzung.

3. Verfahren nach Anspruch 2, wobei das Verfahren ferner Folgendes umfasst:
als Reaktion auf Bestimmen des zweiten Anrufqualitätsproblems der Echtzeit-Person-zu-Person-Mediensitzung, Erzeugen einer zweiten Statusnachricht, die die Vorrichtungsgesundheitsinformationen der ersten Rechenvorrichtung beinhaltet; und
Senden der zweiten Statusnachricht an die zweite Rechenvorrichtung, um es einem Benutzer der zweiten Rechenvorrichtung zu ermöglichen, über das zweite Anrufqualitätsproblem benachrichtigt zu werden.

4. Verfahren nach Anspruch 3, wobei das Verfahren ferner Codieren der zweiten Statusnachricht umfasst, um einen Dritten am Zugriff auf die Statusinformationen der ersten Rechenvorrichtung zu hindern, wobei der Dritte verschieden von der ersten Rechenvorrichtung und verschieden von der zweiten Rechenvorrichtung ist.

5. Verfahren nach einem der Ansprüche 2-4, wobei Bestimmen der Vorrichtungsgesundheitsinformationen der ersten Rechenvorrichtung mindestens eines von Folgendem umfasst:
Bestimmen eines Zustands des drahtlosen Kommunikationsnetzwerks;
Bestimmen einer Qualität der Echtzeit-Person-zu-Person-Mediensitzung;
Bestimmen eines Gesundheitsstatus der ersten Rechenvorrichtung zu einem gegenwärtigen Zeitpunkt; oder
Erkennen mindestens einer Eingabe des Benutzers an die erste Rechenvorrichtung.

6. Verfahren nach einem der Ansprüche 2-5, wobei das Verfahren ferner Folgendes umfasst:
Nutzen von Kontextinformationen, die von mindestens einem Sensor der ersten Rechenvorrichtung erhalten werden, um die Bestimmung der Vorrichtungsgesundheitsinformationen der ersten Rechenvorrichtung zu ermöglichen.

7. Verfahren nach einem der Ansprüche 2-6, wobei das Verfahren ferner Folgendes umfasst:
Bestimmen einer Änderung in den Statusinformationen der ersten Rechenvorrichtung zu einem aktuellen Zeitpunkt im Vergleich zu den Statusinformationen der ersten Rechenvorrichtung zu einem früheren Zeitpunkt;
Erzeugen einer dritten Statusnachricht zum Senden an die zweite Rechenvorrichtung basierend auf der bestimmten Änderung in den Statusinformationen der ersten Rechenvorrichtung; und
Senden der dritten Statusnachricht an die zweite Rechenvorrichtung, um es der zweiten Rechenvorrichtung zu ermöglichen, Anrufqualitätsprobleme der Echtzeit-Person-zu-Person-Mediensitzung aufzulösen.

8. Verfahren nach einem der Ansprüche 2-7, wobei das zweite Anrufqualitätsproblem unter Verwendung von mindestens einem von Folgendem vorhergesagt wird:
einem maschinell erlernten Modell;
einem internen logischen System; oder
Hystereselogik.

9. Verfahren nach einem der vorhergehenden Ansprüche, wobei das Verfahren ferner Aufbauen einer Vorrichtung-zu-Vorrichtung-Kommunikation zum Austausch von Statusnachrichten während der Echtzeit-Person-zu-Person-Mediensitzung unter Verwendung einer Handshake-Prozedur umfasst, wobei die Handshake-Prozedur Folgendes umfasst:
Senden einer Anforderungsnachricht an die zweite Rechenvorrichtung über das drahtlose Kommunikationsnetzwerk, wobei die gesendete Anforderungsnachricht einen Austausch von Statusnachrichten zwischen der zweiten Rechenvorrichtung und der ersten Rechenvorrichtung anfordert; oder
Empfangen einer Anforderungsnachricht von der zweiten Rechenvorrichtung über das drahtlose Kommunikationsnetzwerk, wobei die empfangene Anforderungsnachricht den Austausch von Statusnachrichten zwischen der zweiten Rechenvorrichtung und der ersten Rechenvorrichtung anfordert.

10. Verfahren nach Anspruch 9, wobei die Handshake-Prozedur ferner Folgendes umfasst:
als Reaktion auf Senden einer Anforderungsnachricht an die zweite Rechenvorrichtung, Empfangen einer Antwortnachricht von der zweiten Rechenvorrichtung über das drahtlose Kommunikationsnetzwerk, wobei die empfangene Antwortnachricht angibt, dass die zweite Rechenvorrichtung den Austausch von Statusnachrichten zwischen der zweiten Rechenvorrichtung und der ersten Rechenvorrichtung unterstützt; oder
als Reaktion auf Empfangen einer Anforderungsnachricht von der zweiten Rechenvorrichtung, Senden einer Antwortnachricht an die zweite Rechenvorrichtung über das drahtlose Kommunikationsnetzwerk, wobei die gesendete Antwortnachricht angibt, dass die erste Rechenvorrichtung den Austausch von Statusnachrichten zwischen der zweiten Rechenvorrichtung und der ersten Rechenvorrichtung unterstützt.

11. Verfahren nach einem der Ansprüche 9 oder 10, wobei das Verfahren ferner Folgendes umfasst:
Durchführen der Handshake-Prozedur, um zu bestimmen, ob die zweite Rechenvorrichtung den Austausch von Statusnachrichten zwischen der zweiten Rechenvorrichtung und der ersten Rechenvorrichtung unter Verwendung einer oder mehrerer Dual-Tone Multi-Frequency (DTMF)-Ziffern von A, B, C oder D unterstützt;
Erzeugen einer DTMF-Statusnachricht, die Statusinformationen der ersten Rechenvorrichtung beinhaltet, wobei die DTMF-Statusnachricht eine oder mehrere DTMF-Ziffern von A, B, C oder D verwendet; und
Senden der DTMF-Statusnachricht an die zweite Rechenvorrichtung über das drahtlose Kommunikationsnetzwerk als Reaktion auf Bestimmen, dass die zweite Rechenvorrichtung den Austausch von Statusnachrichten zwischen der zweiten Rechenvorrichtung und der ersten Rechenvorrichtung unter Verwendung einer oder mehrerer DTMF-Ziffern von A, B, C oder D unterstützt.

12. Verfahren nach einem der Ansprüche 10 oder 11, wobei das Verfahren ferner Folgendes umfasst:
Durchführen der Handshake-Prozedur, um zu bestimmen, ob die zweite Rechenvorrichtung den Austausch von Statusnachrichten zwischen der zweiten Rechenvorrichtung und der ersten Rechenvorrichtung unter Verwendung von Real-Time Transport Protocol (RTP)-Kopfzeilenerweiterungen unterstützt;
Erzeugen einer RTP-Statusnachricht, die Statusinformationen der ersten Rechenvorrichtung beinhaltet, wobei die RTP-Statusnachricht eine RTP-Kopfzeilenerweiterung verwendet;
Senden der RTP-Statusnachricht an die zweite Rechenvorrichtung über das drahtlose Kommunikationsnetzwerk als Reaktion auf Bestimmen, dass die zweite Rechenvorrichtung den Austausch von Statusnachrichten zwischen der zweiten Rechenvorrichtung und der ersten Rechenvorrichtung unter Verwendung von RTP-Kopfzeilenerweiterungen unterstützt.

13. Rechenvorrichtung (102), umfassend:
mindestens einen Prozessor (204); und
computerlesbare Speichermedien (210), die Anweisungen umfassen, die als Reaktion auf die Ausführung durch den Prozessor die Rechenvorrichtung anweisen, eines von den Verfahren nach den Ansprüchen 1-12 durchzuführen.

14. Computerlesbare Anweisungen, die, wenn sie von einem Prozessor einer Rechenvorrichtung ausgeführt werden, die Rechenvorrichtung anweisen, eines von den Verfahren nach den Ansprüchen 1-12 durchzuführen.

## Revendications

1. Procédé (900) réalisé par un premier dispositif informatique (102-1), le procédé comprenant :
la demande d'un enregistrement (902) dans un réseau de communication sans fil ;
en réponse à la réception de l'enregistrement dans le réseau de communication sans fil, l'établissement (904) d'une session multimédia de personne à personne en temps réel sur le réseau de communication sans fil avec un second dispositif informatique (102-2) ;
la réception (906) d'un message d'état provenant du second dispositif informatique, le message d'état comportant des informations sur l'état de santé du second dispositif informatique, les informations sur l'état de santé du dispositif indiquant la qualité de la session multimédia de personne à personne en temps réel ;
la détermination (908) d'un problème de qualité d'appel de la session multimédia de personne à personne en temps réel sur la base des informations sur l'état de santé du second dispositif informatique ;
en réponse à la détermination du problème de qualité d'appel de la session multimédia de personne à personne en temps réel, la génération (910) d'une notification pour informer un utilisateur du premier dispositif informatique du problème de qualité d'appel de la session multimédia de personne à personne en temps réel ; et
le fait de notifier (912) l'utilisateur du premier dispositif informatique à l'aide de la notification ;
le procédé comprenant en outre :
l'utilisation des informations sur l'état de santé du second dispositif informatique pour déterminer la cause du problème de qualité d'appel de la session multimédia de personne à personne en temps réel ;
la détermination, à l'aide de la cause, d'une recommandation permettant à l'utilisateur du premier dispositif informatique de résoudre le problème de qualité d'appel, la recommandation comprenant une tâche recommandée à réaliser par l'utilisateur ; et
le fait de notifier la recommandation à l'utilisateur du premier dispositif informatique, dans lequel la recommandation comprend un raccourci permettant d'accélérer l'exécution de la tâche recommandée à réaliser par l'utilisateur.

2. Procédé selon une quelconque revendication précédente, le procédé comprenant en outre :
la détermination des informations sur l'état de santé du premier dispositif informatique ;
la détermination d'un second problème de qualité d'appel de la session multimédia de personne à personne en temps réel sur la base des informations sur l'état de santé du premier dispositif informatique ;
en réponse à la détermination du second problème de qualité d'appel de la session multimédia de personne à personne en temps réel, la génération d'une seconde notification pour informer l'utilisateur du premier dispositif informatique du second problème de qualité d'appel de la session multimédia de personne à personne en temps réel ; et
le fait de notifier l'utilisateur du premier dispositif informatique du second problème de qualité d'appel de la session multimédia de personne à personne en temps réel.

3. Procédé selon la revendication 2, le procédé comprenant en outre :
en réponse à la détermination du second problème de qualité d'appel de la session multimédia de personne à personne en temps réel, la génération d'un deuxième message d'état qui comporte les informations sur l'état de santé du premier dispositif informatique ; et
l'envoi du deuxième message d'état au second dispositif informatique afin de permettre à l'utilisateur du second dispositif informatique d'être informé du second problème de qualité d'appel.

4. Procédé selon la revendication 3, le procédé comprenant en outre le codage du deuxième message d'état pour empêcher un tiers d'accéder aux informations d'état du premier dispositif informatique, le tiers étant distinct du premier dispositif informatique et distinct du second dispositif informatique.

5. Procédé selon l'une quelconque des revendications 2 à 4, dans lequel la détermination des informations sur l'état de santé du premier dispositif informatique comprend au moins l'une des étapes suivantes :
la détermination d'une condition du réseau de communication sans fil ;
la détermination d'une qualité de la session multimédia de personne à personne en temps réel ;
la détermination d'un état de santé du premier dispositif informatique à un instant actuel ; ou
la détection d'au moins une entrée dans le premier dispositif informatique provenant de l'utilisateur.

6. Procédé selon l'une quelconque des revendications 2 à 5, le procédé comprenant en outre :
l'utilisation des informations contextuelles obtenues à partir d'au moins un capteur du premier dispositif informatique pour permettre la détermination des informations sur l'état de santé du premier dispositif informatique.

7. Procédé selon l'une quelconque des revendications 2 à 6, le procédé comprenant en outre :
la détermination d'un changement dans les informations d'état du premier dispositif informatique à un instant actuel par rapport aux informations d'état du premier dispositif informatique à un instant antérieur ;
la génération d'un troisième message d'état à envoyer au second dispositif informatique sur la base du changement déterminé des informations d'état du premier dispositif informatique ; et
l'envoi du troisième message d'état au second dispositif informatique pour permettre au second dispositif informatique de résoudre les problèmes de qualité d'appel de la session multimédia de personne à personne en temps réel.

8. Procédé selon l'une quelconque des revendications 2 à 7, dans lequel le second problème de qualité d'appel est prédit à l'aide d'au moins l'un des éléments suivants :
un modèle appris par machine ;
un système logique interne ; ou
une logique d'hystérésis.

9. Procédé selon une quelconque revendication précédente, le procédé comprenant en outre l'établissement d'une communication de dispositif à dispositif pour échanger des messages d'état pendant la session multimédia de personne à personne en temps réel au moyen d'une procédure d'établissement de liaison, la procédure d'établissement de liaison comprenant :
l'envoi d'un message de requête au second dispositif informatique via le réseau de communication sans fil, le message de requête envoyé demandant un échange de messages d'état entre le second dispositif informatique et le premier dispositif informatique ; ou
la réception d'un message de requête provenant du second dispositif informatique via le réseau de communication sans fil, le message de requête reçu demandant l'échange de messages d'état entre le second dispositif informatique et le premier dispositif informatique.

10. Procédé selon la revendication 9, dans lequel la procédure d'établissement de liaison comprend en outre :
en réponse à l'envoi d'un message de requête au second dispositif informatique, la réception d'un message de réponse provenant du second dispositif informatique via le réseau de communication sans fil, le message de réponse reçu indiquant que le second dispositif informatique prend en charge l'échange de messages d'état entre le second dispositif informatique et le premier dispositif informatique ; ou
en réponse à la réception d'un message de requête provenant du second dispositif informatique, l'envoi d'un message de réponse au second dispositif informatique via le réseau de communication sans fil, le message de réponse envoyé indiquant que le premier dispositif informatique prend en charge l'échange de messages d'état entre le second dispositif informatique et le premier dispositif informatique.

11. Procédé selon l'une quelconques des revendications 9 ou 10, le procédé comprenant en outre :
la réalisation de la procédure d'établissement de liaison pour déterminer si le second dispositif informatique prend en charge l'échange de messages d'état entre le second dispositif informatique et le premier dispositif informatique en utilisant un ou plusieurs chiffres multifréquence double tonalité, DTMF, A, B, C ou D ;
la génération d'un message d'état DTMF qui comporte des informations d'état du premier dispositif informatique, le message d'état DTMF utilisant un ou plusieurs chiffres DTMF A, B, C ou D ; et
l'envoi du message d'état DTMF au second dispositif informatique via le réseau de communication sans fil, en réponse à la détermination que le second dispositif informatique prend en charge l'échange de messages d'état entre le second dispositif informatique et le premier dispositif informatique en utilisant un ou plusieurs chiffres DTMF A, B, C ou D.

12. Procédé selon l'une quelconque des revendications 10 ou 11, le procédé comprenant en outre :
la réalisation de la procédure d'établissement de liaison pour déterminer si le second dispositif informatique prend en charge l'échange de messages d'état entre le second dispositif informatique et le premier dispositif informatique en utilisant des extensions d'en-tête de protocole de transport en temps réel, RTP ;
la génération d'un message d'état RTP qui comporte des informations d'état du premier dispositif informatique, le message d'état RTP utilisant une extension d'en-tête RTP ;
l'envoi du message d'état RTP au second dispositif informatique via le réseau de communication sans fil, en réponse à la détermination que le second dispositif informatique prend en charge l'échange de messages d'état entre le second dispositif informatique et le premier dispositif informatique en utilisant des extensions d'en-tête RTP.

13. Dispositif informatique (102), comprenant :
au moins un processeur (204) ; et
un support de stockage lisible par ordinateur (210) comprenant des instructions, répondant à l'exécutionpar le processeur, pour diriger le dispositif informatique afin de réaliser l'un quelconque des procédés selon les revendications 1 à 12.

14. Instructions lisibles par ordinateur qui, lorsqu'elles sont exécutées par un processeur d'un dispositif informatique, dirigent le dispositif informatique afin de réaliser l'un quelconque des procédés selon les revendications 1 à 12.
